(19)

Europäisches
Patentamt
European
Patent Office
Office européen
des brevets

(11)  **EP 3 319 318 B1**

(12)  **EUROPEAN PATENT SPECIFICATION**

(45) Date of publication and mention
of the grant of the patent:
**14.08.2019  Bulletin 2019/33**

(51) Int Cl.:
*H04N 19/13* [(2014.01)]      *H04N 19/593* [(2014.01)]
*H04N 19/94* [(2014.01)]

(21) Application number: **16197122.1**

(22) Date of filing: **03.11.2016**

(54) **INTRA COMPRESSION OF SCREEN CONTENT BASED ON SOFT CONTEXT FORMATION**

INTRAKOMPRESSION VON BILDSCHIRMINHALTEN AUF DER BASIS VON SOFTEN
KONTEXTFORMATIONEN

COMPRESSION INTERNE DE CONTENU D'ÉCRAN SUR LA BASE DE LA FORMATION DE
CONTEXTE DOUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.05.2018  Bulletin 2018/19**

(73) Proprietor: **Deutsche Telekom AG
53113 Bonn (DE)**

(72) Inventor: **STRUTZ, Tilo
04157 Leipzig (DE)**

(74) Representative: **Vossius & Partner
Patentanwälte Rechtsanwälte mbB
Siebertstrasse 3
81675 München (DE)**

(56) References cited:
**US-A1- 2016 316 214**

• **HOWARD P G: "TEXT IMAGE COMPRESSION
USING SOFT PATTERN MATCHING",
COMPUTER JOURNAL, OXFORD UNIVERSITY
PRESS, SURREY, GB, vol. 40, no. 2/03, 1 January
1997 (1997-01-01), pages 146-156, XP000738263,
ISSN: 0010-4620, DOI:
10.1093/COMJNL/40.2_AND_3.146**

• **ZHU W ET AL: "Non-RCE3:Template-based
palette prediction", 14. JCT-VC MEETING;
25-7-2013 - 2-8-2013; VIENNA; (JOINT
COLLABORATIVE TEAM ON VIDEO CODING OF
ISO/IEC JTC1/SC29/WG11 AND ITU-T SG.16 );
URL:
HTTP://WFTP3.ITU.INT/AV-ARCH/JCTVC-SITE/,,
no. JCTVC-N0169-v3, 30 July 2013 (2013-07-30),
XP030114648,**

• **XU JIZHENG ET AL: "Overview of the Emerging
HEVC Screen Content Coding Extension", IEEE
TRANSACTIONS ON CIRCUITS AND SYSTEMS
FOR VIDEO TECHNOLOGY, IEEE SERVICE
CENTER, PISCATAWAY, NJ, US, vol. 26, no. 1, 1
January 2016 (2016-01-01), pages 50-62,
XP011592177, ISSN: 1051-8215, DOI:
10.1109/TCSVT.2015.2478706 [retrieved on
2016-01-05]**

• **D. MARPE ET AL: "Context-based adaptive binary
arithmetic coding in the H.264/AVC video
compression standard", IEEE TRANSACTIONS
ON CIRCUITS AND SYSTEMS FOR VIDEO
TECHNOLOGY, vol. 13, no. 7, 1 July 2003
(2003-07-01), pages 620-636, XP055119784, ISSN:
1051-8215, DOI: 10.1109/TCSVT.2003.815173**

**Description**

The present invention relates to a method and a system for efficiently compressing images, preferably for lossless compression of screen content, by estimating contextual probability distributions based on virtually all samples processed up to a current position in the image. Among others, one challenge in data compression is to transmit or store a minimum number of bits per sample that should be as close as possible to the number of bits defined by the actual average information content. The actual average information content can generally be approximated by the contextual entropy. The challenge is generally that the optimal estimation of contextual symbol probabilities is a kind of artificial-intelligence problem and requires enormous computational efforts. Therefore, practical compression methods typically utilize some pre-knowledge about the data.

The research in lossless image compression has focused in the past either on natural images or on color-map images with up to 256 different colors. Natural images, such as photographs, show a high correlation between the neighboring pixels, and compression systems based on pixel-value prediction are most successful.

Images with graphical content are compressed with methods based on dictionary-based compression such as Lempel-Ziv-Welch (LZW) or LZ77. The repetition of sample combinations can also be efficiently handled via prediction by partial matching (PPM). Regarding synthetic color-map images, the compression can be efficient, for example, based on a piece-wise constant model, or using a generalized context tree (GCT) algorithm with incomplete structure

Further relevant coding techniques are found in the following prior art.

HOWARD P G: "TEXT IMAGE COMPRESSION USING SOFT PATTERN MATCHING", COMPUTER JOURNAL, OXFORD UNIVERSITY PRESS, SURREY, GB, vol. 40, no. 2/03, 1 January 1997, pages 146-156, ISSN: 0010-4620, DOI: 10.1093/COMJNL/40.2_AND_3.146 which discloses an image compression method which determines "marks" within the image and encodes a code index if there is an acceptable match. Otherwise, the bitmap itself is coded.

US 2016/316214 A1 which discloses the use of a palette-based coding mode involving a dynamically generated palette and discloses that pixel values that are not properly described by the palette are explicitly coded. In order to indicate whether the palette mode coding is used or whether the explicit values of the pixels are encoded, an "escape" flag is coded in the bitstream.

Little effort, however, has been made towards the lossless compression of those images which can neither be compressed efficiently with conventional predictive techniques, such as CALIC, JPEG-LS, JPEG2000, H.264/AVC or high efficiency video coding (HEVC), nor with methods assuming repeating patterns in the data. As a vast portion of pictures found in the internet belong to this class of images, a dedicated compression system is indispensable. A great step towards optimal compression of these data is accomplished by using weighted context mixing. As this also concerns the compression of image sequences, there is rising interest in the compression of so-called screen content. The HEVC standardization group has developed a respective dedicated extension.

It is an objective of this invention to provide a method and system for efficiently compressing such images by estimating contextual probability distributions based on virtually all samples processed up to a current position in the image.

Among others, it is a gist of the present invention that the distribution model is newly generated for each pixel and it is fed into a standard multi-level arithmetic coder together with the actual pixel value, enabling a coding close to the estimated contextual entropy.

The method and system may also be applied in the framework of HEVC for the compression of screen content. The demands and requirements in screen-content coding have a broad spectrum and are extremely diverse. Low costs and low latency are two major opponents of maximum compression, along with the request for flexibility, for example, in the presence of mixed content.

The method and system for compression according to the present invention focuses on maximum compression of synthetic data such as computer generated graphics, text, and screenshots. The method and system follows the approach of statistical compression and implements a two-step processing of modeling and coding.

In principle, the problem of ideal entropy coding is solved by arithmetic coding, however, the modeling of probabilities remains an objective for this invention. It is a further objective to reduce the computational complexity to a feasible order while providing an excellent compression performance.

The above objectives are among those achieved by the independent claims. The dependent claims relate to further aspects of the invention.

The method according to the present invention is computer-implemented. However, it is understood by the skilled person that there are also other ways of implementing the method according to the present invention.

Let $p(s_i)$ be the probability of symbol $s_i$. Then $I(s_i) = -\log_2 [p(s_i)]$ [bit] is the information content associated with the symbol $s_i$. In practical applications, the probabilities are often not known in advance, but can be approximated by the relative frequency $n(s_i)/N$, if $n(s_i)$ is the count of symbol $s_i$ and N is the total number of all $s_i$. The optimal coding of symbol $s_i$ is achieved when the coding scheme outputs exactly $I(s_i)$ bits. The only known coding method, which can perform close to this optimum, is called arithmetic coding. Hereinafter only causal systems are considered.

Typically, the probability of a symbol is dependent on what happened in the past, allowing for the probabilities to be approximated by $n(s_i|C)/N_C$ and $I(s_i|C) = -\log2\,[p(s_i|C)]$ [bit]. Wherein the variable C defines the context, i.e., the past of the occurrence of $s_i$, $n(s_i|C)$ is the frequency of $s_i$ occurring in the context $C$, and $N_C$ is the number representing how often the context C has been observed up to the current position. If a symbol has to be encoded, its contextual probability $p(s_i|C)$ should be known. In images, there are dependencies between single pixel values and the contextual probability $p(s_i|C)$ is different from $p(s_i)$.

In an illustrative example, a grey-level image is considered with eight bits per pixel. The estimation of $p(s_i)$ is simple. The different symbols $s_i$ ranging between 0 and 255 have to be counted and the frequencies $n(s_i)$ can be stored in a histogram with $2^8 = 256$ bins representing the distribution of all different $s_i$.

If the current pixel would be related to one of its neighbors, 256 contexts have to be considered and for each context a separate histogram has to be determined. All counts could be stored in a two-dimensional histogram with $256^2$ bins. It is clear for the skilled person that the extension of the context to two or more adjacent pixels will become difficult. Another algorithm is then required which does not store all probabilities (or counts), but rather estimates the contextual probabilities in a more memory-efficient manner. This, however, leads to the dilemma in programming that an algorithm is either fast or memory consuming, or it requires little memory and is slow.

The context problem can be eased to a certain extent by mapping multi-level symbols to binary symbols where only a single bit is predicted based on context bits.

The present invention relates to a method for encoding an image, in particular for reducing the computational complexity for encoding the image, based on an optimal estimation of a distribution probability, wherein the method comprises encoding of at least one symbol for a property vector X of a respective pixel of a plurality of pixels in sequence based on contextual patterns formed by a plurality of neighboring pixels. The method comprises encoding a distribution symbol of the property vector X from a distribution of the property vectors found in the contextual patterns that are identical or similar to the contextual pattern of the respective pixel, when the property vector X of the respective pixel has occurred in any of the contextual patterns that are identical or similar to the contextual pattern of the respective pixel. The method further comprises encoding a first stage exception handling symbol and a palette symbol of the respective property vector X of a dynamically generated palette of property vectors, when the respective property vector X of the respective pixel has not occurred in the contextual patterns that are identical or similar to the contextual pattern of the respective pixel. The method further comprises encoding a first stage exception handling symbol, a second stage exception handling symbol, and a representation of all components of the property vector X, when the property vector X has not occurred in the contextual patterns that are identical or similar to the contextual pattern of the respective pixel and the property vector X is not found in the palette.

Preferably, the similarity between two contextual patterns is determined based on the comparison of at least one threshold value with a modulus of a vector difference of the property vector of at least one pixel of the respective contextual pattern and a pixel in a corresponding position of the pattern referred to in the first list.

Preferably, a similarity value is calculated from the individual distance measures between property vectors in the corresponding positions in the respective patterns. Preferably, a similarity value is the count of positions in the contextual pattern which are similar to the corresponding positions in the other pattern.

Preferably, during the encoding of the image a first list is dynamically generated, which comprises references to patterns found in the image and further comprises for every respective pattern a histogram containing a distribution of all property vectors X which have occurred in the respective pattern during the scan, and wherein, when during the encoding of the respective pixel no corresponding pattern is found in the first list, the respective pattern is appended to the first list, wherein the patterns comprised in the first list patterns are not identical.

Preferably, the method further comprises the steps of updating the property vector distribution of the palette after the encoding of the first stage exception handling symbol and the palette symbol of the respective property vector X and updating a prediction error distribution after the encoding of the first stage exception handling symbol, the second stage exception handling symbol, and the prediction error.

Preferably, during the encoding of a respective property vector X a second list is dynamically and temporally generated, based on a calculated similarity value. Preferably, the second list comprises a reference to at least one contextual pattern of the first list being similar to the contextual pattern of the neighboring pixels of the respective pixel.

Preferably, the second list is empty when no similar pattern has been found to the contextual pattern of the neighboring pixels of the respective pixel.

Preferably, the method further comprises the step of updating the respective histograms of patterns referred to in the first list after the encoding of the respective property vector X.

Preferably, the method further comprises the step of updating the respective histograms of patterns referred to in the first list, based on the second list, after the encoding of the respective property vector X.

Preferably, the distribution of the property vectors found in the contextual patterns that are identical or similar to the contextual pattern of the respective pixel is generated by merging the respective histograms of all items on the second list having a highest similarity value.

Preferably, a set of thresholds for each of the positions in the contextual pattern is determined based on image properties.

Preferably, the thresholds are variably adapted during the encoding.

Preferably, the method further comprises the step of reducing the number of items on the first and/or second list by deleting at least one pattern which is determined as not being relevant from the first list. Preferably, by deleting at least one pattern which is determined as not being relevant from the second list.

Preferably, the representation of all components of the property vector X is based on a prediction of the components and wherein for a first component a preferred prediction method is determined and the preferred prediction method is used to predict at least one further component.

Alternatively still preferably, the representation of all components of the property vector X is based on a prediction of the components and wherein for a first component a preferred prediction method is determined and the preferred prediction method is used to predict all further components.

In a preferred embodiment of the invention the number of neighboring pixels forming a contextual pattern is six or less.

The present invention also relates to a computer program product comprising one or more computer readable media having computer executable instructions for performing the steps of any of the aforementioned methods according to the present invention.

The present invention also relates to a system for encoding an image, in particular for reducing the computational complexity for encoding the image, based on an optimal estimation of a distribution probability. The system is configured to encode at least one symbol for a property vector X of a respective pixel of a plurality of pixels in sequence based on contextual patterns formed by a plurality of neighboring pixels. The system comprises: an encoding unit being configured to encode a distribution symbol of the property vector X from a distribution of the property vectors found in the contextual patterns that are identical or similar to the contextual pattern of the respective pixel, when the property vector X of the respective pixel has occurred in any of the contextual patterns that are identical or similar to the contextual pattern of the respective pixel. The encoding unit is configured to encode a first stage exception handling symbol and a palette symbol of the respective property vector X of a dynamically generated palette of property vectors, when the respective property vector X of the respective pixel has not occurred in the contextual patterns that are identical or similar to the contextual pattern of the respective pixel. The encoding unit is further configured to encode a first stage exception handling symbol, a second stage exception handling symbol, and a representation of all components of the property vector X, when the property vector X has not occurred in the contextual patterns that are identical or similar to the contextual pattern of the respective pixel and the property vector X is not found in the palette.

Preferably, the system comprises means being configured to determine the similarity between two contextual patterns based on the comparison of at least one threshold value with a modulus of a vector difference of the property vector of at least one pixel of the respective contextual pattern and a pixel in a corresponding position of the pattern referred to in the first list.

Preferably, the system comprises means being configured to calculate a similarity value from the individual distance measures between property vectors in the corresponding positions in the respective patterns. Preferably, the system comprises means being configured to determine the similarity value by counting the positions in the contextual pattern which are similar to the corresponding positions in the other pattern.

Preferably, the system comprises means being configured to dynamically generate a first list during the encoding of the image, which comprises references to patterns found in the image and further comprises for every respective pattern a histogram containing a distribution of all property vectors X which have occurred in the respective pattern during the scan. Preferably, the system comprises means being configured to append to the first list the respective pattern when during the encoding of the respective pixel no corresponding pattern is found in the first list, wherein the patterns comprised in the first list patterns are not identical.

Preferably, the system comprises means being configured to update the property vector distribution of the palette after the encoding of the first stage exception handling symbol and the palette symbol of the respective property vector X. Preferably, the system comprises means being configured to update a prediction error distribution after the encoding of the first stage exception handling symbol, the second stage exception handling symbol, and the prediction error.

Preferably, the system comprises means being configured to dynamically and temporally generate a second list during the encoding of a respective property vector X, based on a calculated similarity value. Preferably, the second list comprises a reference to at least one contextual pattern of the first list being similar to the contextual pattern of the neighboring pixels of the respective pixel. Preferably, the second list is empty when no similar pattern has been found to the contextual pattern of the neighboring pixels of the respective pixel.

Preferably, the system comprises means being configured to update the respective histograms of patterns referred to in the first list after the encoding of the respective property vector X.

Preferably, the system comprises means being configured to update the respective histograms of patterns referred to in the first list, based on the second list, after the encoding of the respective property vector X.

Preferably, the system comprises means being configured to generate the distribution of the property vectors found in the contextual patterns that are identical or similar to the contextual pattern of the respective pixel by merging the respective histograms of all items on the second list having a highest similarity value.

Preferably, the system comprises means being configured to determine a set of thresholds for each of the positions in the contextual pattern based on image properties.

Preferably, the system comprises means being configured to are variably adapted the thresholds during the encoding.

Preferably, the system comprises means being configured to reduce the number of items on the first and/or second list by deleting at least one pattern which is determined as not being relevant not been recently found to be similar from the first list, and/or by deleting at least one pattern which is determined as not being relevant with a similarity value smaller than the highest similarity value from the second list.

Preferably, the representation of all components of the property vector X is based on a prediction of the components and the system comprises means being configured to determine for a first component a preferred prediction method and the preferred prediction method is used to predict at least one further component.

Alternatively still preferably, the representation of all components of the property vector X is based on a prediction of the components and the system comprises means being configured to determine for a first component a preferred prediction method and the preferred prediction method is used to predict all further components.

## Brief description of the drawings

The accompanying drawings, which are included to provide a further understanding of the invention, illustrate embodiments of the invention and together with the description serve to explain the principle of the invention.

In the drawings:

Fig. 1 shows an illustration of the formation of a contextual pattern of one embodiment of the method according to the invention,
Fig. 2 shows a block-diagram of one embodiment of the first stage of the method according to the invention, and
Fig. 3 shows a block-diagram of one embodiment of the second and third stage of the method according to the invention.

## Detailed description of the invention

The invention is defined by the appended claims. Reference will now be made in detail to the preferred embodiments of the present invention, examples of which are illustrated in the accompanying drawings. In particular, the preferred embodiments of the present invention as described below refer to lossless compression of screen content. However, it is clear for the skilled person from the overall disclosure of the present invention that the invention is not limited thereto. The accompanying drawings illustrate exemplary embodiments of the present invention and provide a more detailed description of the present invention.

In addition, wherever possible, the same reference numbers will be used throughout the drawings to refer to the same or like parts, and a repeated description thereof will be omitted.

In the meantime, although terms including an ordinal number, such as first or second, may be used to describe a variety of constituent elements, the constituent elements are not limited to the terms, and the terms are used only for the purpose of discriminating one constituent element from other constituent elements.

Hereinafter the terms context, contextual pattern, and pattern are used as synonyms.

In one embodiment of the present invention, the pixels are processed in raster-scan order from the top left to the bottom right position. The symbol distribution at the current pixel position can be estimated as follows.

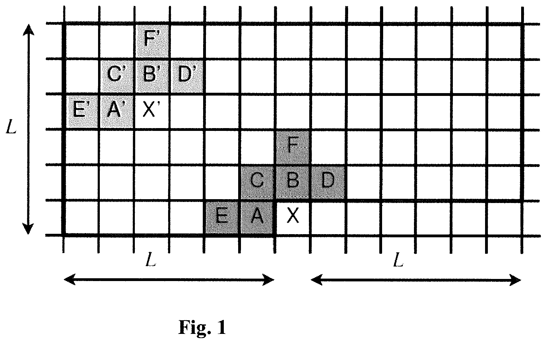

Figure 1 shows an illustration of the formation of a contextual pattern of one embodiment of the method according to the invention. The contextual pattern of the current pixel $x$ is defined, for example, by the values of six adjacent pixels a, b, c, d, e, and f with their respective property vectors A, B, C, D, E, and F.

These pixels form a pattern within a defined template. From the top-left position to the current position, the image has to be scanned for identical or similar patterns. This process is also known as template matching, pattern matching, or texture context matching. The main idea is to compare the pattern at the position of the current value X with patterns in the causal neighborhood.

The higher the similarity between the textures is, the higher the chance is that value X' is a good estimate for X. This search does not need extra memory and is extremely slow.

Therefore, the search space is typically limited to a maximum distance from the current position in order to keep the computational costs low.

Unfortunately, patterns outside this search space are usually lost for the estimation of the symbol distribution. The similarity between the patterns could be measured in different ways, for example, based on the absolute differences |A' - A|, |B' - B|, or the like.

For each pattern found to be similar enough, the value at the position X' is collected. The entirety of all X' values has to be processed in a suitable manner forming a symbol distribution. Investigations have shown that patterns with more than six pixels do not improve the results of the invention.

The method and system according to the invention speeds up the search procedure without defining a search space, i.e., without losing any pattern, by storing the patterns, preferably the coordinates of the patterns in the image, in a dynamically generated first list, which is growing during the entire process of image compression.

The first list comprises in the most extreme case all patterns from the past. Together with each pattern, a stacked histogram is stored containing all X values that have occurred so far in this context. The frequency counts of these values are successively updated. Based on this technique, the current pattern must only be compared with those patterns which are referenced in the first list.

In addition, a second list is maintained. This second list is empty when starting at a new pixel position and is filled with references to all patterns from the pattern list which are similar to the actual pattern surrounding the current pixel. The second list is also referred to as similarity list in the following.

The following pseudo-code relates to an embodiment of the method according to the invention:

```
1 start with an empty pattern list and empty palette;
2 reset distributions associated with prediction errors (stage 3):
3 do
4 {
5 go to the next pixel position ;
6 // Stage 1
7 clear the similarity list;
8 set the pointer to the first item in pattern list;
9 while (end of pattern list is not reached yet)
10 {
11 compare actual pattern with current item in pattern list;
12 if (match found)
13 {
14 remember best match;
15 include found pattern in similarity list;
16 }
```

(continued)

```
17 set the pointer to the next item in pattern list;
18 }
19 if (no full match has been found)
20 {
21 include actual pattern in pattern list;
22 }
23 create distribution based on pattern items in similarity list having best match;
24 if (X is element of the distribution)
25 {
26 encode number of X;
27 }
28 else
29 {
30 encode exception handling symbol (stage-1 ESC);
31 // Stage 2
32 if (X is element of the palette)
33 {
34 encode number of X;
35 }
36 else
37 {
38 encode exception handling symbol (stage-2 ESC);
39 // Stage 3
40 for each component of X
41 {
42 predict component using MAP prediction;
43 encode prediction error ;
44 increment count of error symbol;
45 }
46 append X to palette;
47 }
48 increment count of the stage-2 symbol;
49 }
50 update histograms of all items in similarity list having best match (i .e. increment
     count of the stage-1 symbol);
51 } while (end of image not reached yet);
52 stop;
```

Hereinafter, the above pseudo-code is also referred to as Listing 1. According an embodiment, e.g., the embodiment of Listing 1, processing a single pixel may require up to three stages within the probability-modelling step.

In the first stage, the current pattern is compared to the patterns in the first list. All patterns found to fulfill a similarity criterion are collected in the second list. The similarity criterion is explained below. Those patterns having the highest similarity, referred to as having best match are further taken into account. Their associated histograms are merged to a single distribution. If the current property vector X is an element of the merged histogram, the histogram count is transmitted, and the histograms of all patterns which have contributed to the merged distribution, are updated. Either the count of X is incremented or X is included as a new histogram item for the corresponding pattern with a count of one.

In a preferred embodiment, all counts are regularly down-scaled enabling the adaptation of the distributions to the varying image content. In the disadvantageous case that the property vector X has never been seen before in combination with the found similar patterns, i.e., X is not an element of the merged distribution, an exception handling is initiated and the processing enters stage 2. This is also the case when no similar patterns had been found.

In a preferred embodiment each histogram also contains a special symbol, called ESC, for the exception handling, which is encoded in the exception handling.

The underlying assumption of the second stage is that the current property vector X is not a new one, but has already been observed in the past and is an item of the palette. If this assumption holds true, the corresponding palette symbol is encoded and its count is incremented. Otherwise, another exception handling is initiated and the processing enters the third stage. In the exception handling, another ESC symbol must be encoded and stage 3 is entered, which separately processes each component of the property vector X.

The third stage is only used when a new property vector is detected. In one embodiment of the invention, the processing in the third stage relies on local symbol correlation. Preferably based on a median adaptive prediction (MAP), each component of the current property vector X is predicted and in one embodiment the prediction error is encoded based on the error distribution, which is updated afterwards. The skilled person realizes that other representations of the property vector may also be encoded in the third stage. Furthermore, since X is a new property vector, the vector is to be included in the palette with a count of one.

In the embodiments described above, methods of the second and the third stages have a moderate efficiency. For this reason the described method is less suitable for images with a high number of different property vectors.

In a preferred embodiment, the property vector is the color vector in an RGB image. In one embodiment, before the described compression method is applied, the color images in RGB format are converted to another color space, e.g., a kind of YUV. One out of more than 100 different reversible color transforms is adaptively chosen as described in. Afterwards, the histogram of each color component is packed, i.e., the gaps in the histogram are removed leading to a reduced number of histogram bins. In this embodiment, if, e.g., a color component contains only the three different values 5, 10, and 200, these values are mapped to 0.1 and 2.

A mapping table which contains the three original values is transmitted, enabling the decoder to properly reconstruct these values. If the number of empty bins between the present values is too low, the histogram compaction is disabled. In general, the generated overhead, i.e. table plus table length, is lower than the savings by the improved compression performance.

In all described embodiments of the invention, the definition of similarity is a crucial part in the pattern search and list generation. In a preferred embodiment of the invention, six tolerance thresholds $t_i$ per color component are present with typically $t_i$ being smaller or equal to $t_i+1$.

If $|A - A'| \leq t_0$, $|B - B'| \leq t_1$, $|C - C'| \leq t_2$, $|D - D'| \leq t_3$, $|E - E'| \leq t_4$, $|F - F'| \leq t_5$ for each component of the property vector, then the two patterns are considered as similar to a full match.

As the characteristics can be different in the three components of the property vector, their threshold can also be different. In one embodiment of the invention, the thresholds are newly determined for each image based on a heuristic entropy measure.

Six joint entropies are calculated separately for each vector component:

$$H(XY_i) = \sum_{k=1}^{K} \sum_{j=1}^{K} p(x_k, y_j) \cdot \log_2\left(\frac{1}{p(x_k, y_j)}\right) \quad i = 0, 1, \ldots, 5$$

with K being the number of different signal values, while X and $Y_i \in \{A, B, C, D, E, F\}$ are the respective property vectors at the corresponding pattern positions shown in Figure 1. The joint probability $p(x_k, y_j)$ is estimated based on the frequency with which the vector X and the vector Y jointly occur. The thresholds are derived via

$$t_i = \left\lfloor 0.06 \cdot 1.3^{H(XY_i) + e_i} \right\rfloor with\ e_i = \begin{cases} 0.0\ for\ i = 0, 1 \\ 0.4 \cdot \sum_{i=0}^{1} H(XY_i)\ for\ i = 2, 3 \\ 0.4 \cdot \sum_{i=0}^{3} H(XY_i)\ else \end{cases}$$

while all factors are empirically determined.

The more uniformly distributed the different combinations of property vectors are, i.e. high joint entropy, the higher the thresholds should be in an embodiment of the invention.

For the images being tested, $t_0$ and $t_1$ are equal or close to zero and the maximum observed value is $t_i = 26$. In one embodiment of the invention, the thresholds have to be transmitted to the decoder.

In a preferred embodiment of the invention, the first list is growing during the entire coding process and is filled successively with distinct patterns which have been found in the image. If the tolerance parameters $t_0$ to $t_5$ are set to zero for all vector components, the first list will finally contain all different patterns of the image. Otherwise it will only contain a subset of patterns. This can be understood as vector quantization in the pattern space.

In one embodiment of the invention, the actual pattern is compared to all patterns in the first list. In the beginning of the compression of an image and depending on the image content, the chance of finding a full match in the first list can be low. In order to improve the compression performance, incomplete matches are also allowed in order to gather some useful information about the putative probability of X. Therefore, those patterns which are similar in less than the six positions A to F will also be regarded as being similar in a preferred embodiment of the invention. If at least A or B fulfills the similarity criterion, it is referred to as a match.

In one embodiment of the invention, the similarity value is simply the count of the positions which are similar.

In a preferred embodiment of the invention, the similarity value is simply the count of the positions which are similar, with two exceptions. Firstly, if the vectors are neither similar at A nor at the B position, then the similarity is set to zero. Secondly, position E is only taken into account when position A is similar; the same holds true for F and B.

For example, an ABCDEF match is a full match with similarity s = 6, an ABEF match has s = 4, CDEF results to s = 0, a BCEF match has s = 3, and an AE match has s= 2. The highest observed value s refers in Listing 1 to 'best match' $s_b$.

In one embodiment of the invention, if, after the entire first list has been scanned and there was no full match, the actual pattern represents something new and has to be included in the first list. The histograms from all patterns p in the second list which have best match $s_b = \max_{\forall p}(s_p)$ are merged, forming the distribution for the encoding of the current property vector X.

The combination of variable tolerances $t_i$, the flexible similarity measure, and the merging of contextual information stemming from different patterns is called soft context formation (SCF).

The skilled person will appreciate a number of additional steps to improve the performance of the embodiments of the invention described above without departing from the scope of the present invention. These further improved concepts may be combined in any number or combination with any embodiment of the invention.

In a preferred embodiment, block prediction is used. Screen content often shows regions of constant color or regions of horizontal or vertical stripes. In principle, the proposed processing strategy in the first stage can perfectly deal with these structures. However, the probability distributions will lean towards a single symbol and the interruption of the run of this single symbol can be very costly.

In order to alleviate this scenario, the entire image is analyzed based on quad-tree decomposition. If there are blocks which can be predicted horizontally or vertically, they are identified and corresponding side information is then sent to the decoder. The maximum block size used is preferably 64×64 pixels, the minimum size is preferably 8×8. The quad-tree starts with two levels. The tree depth is adaptively increased, when at least one block show a sufficient high number of different colors.

In one preferred embodiment, prediction of directional structures is used. This embodiment also corresponds to the first stage, while tackling the opposite behavior. At the beginning of a region containing a single symbol, it takes some time until the distribution shows a significant peak representing the high probability of this symbol. If, however, the current pattern is identical to the pattern to the left, then the chance is high that the current X is also identical to its left neighbor. As a consequence, the probability of the left vector should be set to a higher value than derived in the merged histogram. The same can be assumed in vertical direction. In an embodiment of the invention, this assumption is verified at each instance of these arrangements and, if it holds true in more than 50% of these cases, the probability of the symbol to the left or top is increased accordingly.

In one preferred embodiment, a second stage tuning is used. In the second stage, the property vector X is encoded based on a global distribution, i.e., the palette, taking into account all pixels which have already been processed. Local correlations, however, are neglected. Since images with a sufficient number of different property vectors are typically exhibiting some local correlation, the distribution should be modified.

In one embodiment of the invention, the current property vector, separately for each component, is estimated using median adaptive prediction (MAP). The counts of all palette colors which have a Chebychev distance of less than a certain value, preferably 8, to the estimated property vector, are temporarily increased by a distinct amount, preferably by a factor of eight. This reflects the fact that adjacent pixels most likely have a similar property vector.

In one preferred embodiment an improved MAP is used in the third stage. In the third stage, one component after the other has to be predicted and encoded. For the first component, the MAP adaptively selects one out of the three prediction values (estimates) A, B, and (A + B - C).

In one embodiment of the invention, the corresponding prediction error is transmitted and received at the decoder. It is possible to check which estimate would have been the best choice. Assuming that directional structures are similar in all three components, this best predictor is applied to the next component. In order to increase the prediction performance, the set of predictors is extended by C, D, (A + B)/2, and (A + B + C + D + 2)/4. The exact settings used in the described tuning techniques are not reported in detail here as they are empirically determined and have the potential to be improved.

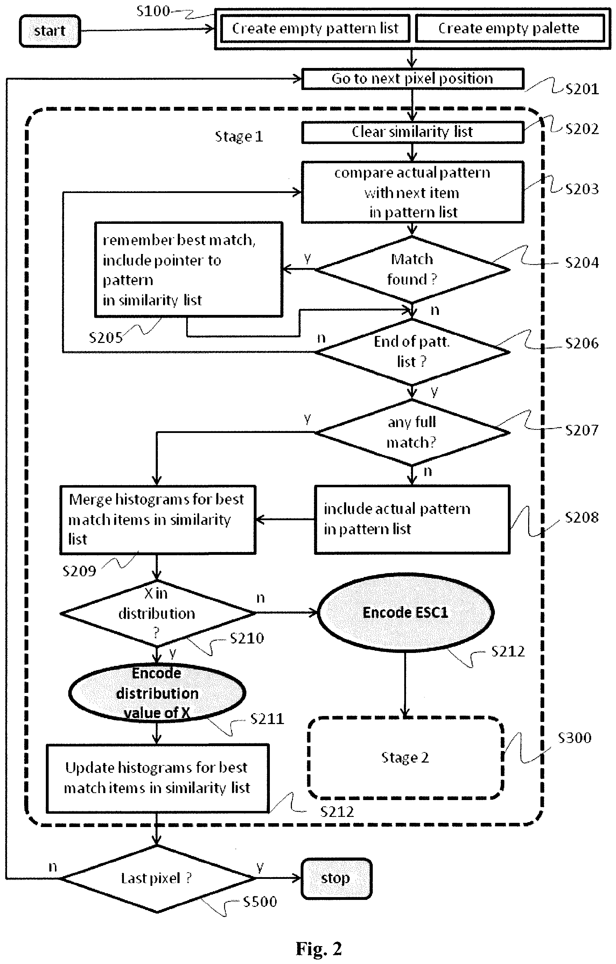

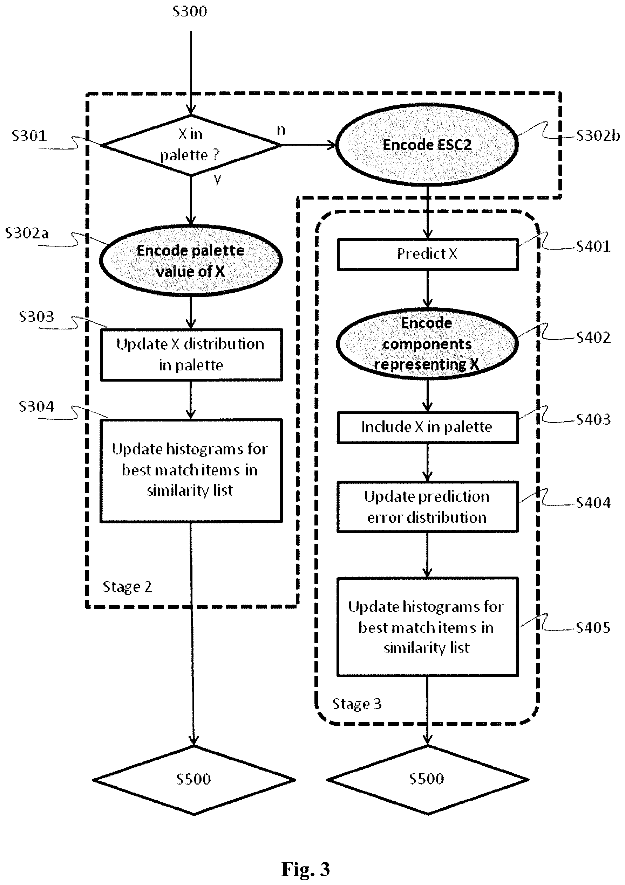

Figures 2 and 3 show block diagrams of one embodiment of the invention. In Figure 2, an embodiment of the first stage is shown and in Figure 3, embodiments of the second and third stage are shown.

Prior to the first stage in an initiation step S100, an empty first list, i.e., a pattern list, and an empty palette is created. Then the in step S201 the next, in case of a new scan the first, pixel is selected and the first stage of processing is entered.

In the first stage in step S202, the second list, i.e., the similarity list is cleared. In a next step S203, the current pattern is compared with the next item on the pattern list. In case a match is found, i.e., step S204 returns positive result, the best match is remembered and the pointer to the pattern under test is included in the similarity list in step S205.

The skilled person realizes that the terms match and best match refer to a result of a similarity comparison as described in the above.

If S204 returns a negative result the method advances in the pattern list in step and repeats step S203 until the end of the pattern list is reached in S206.

In a next step, S207, the method checks if a full match, again referring to the result classification of the similarity comparison, was found.

In case a full match is found in step S209 all histograms of the best match items are merged into a distribution and if no full match is found the current pattern is fist included into the pattern list in S208, then all histograms of the best match items are merged into a distribution.

In step S210, it is checked if the property vector X is found in the distribution. If X is found in the distribution the distribution index of X is encoded S211, the method proceeds in step S212 to update the histograms for best match items, and in step S500, either proceeds to the next pixel or stops if the last pixel was processed in S500.

If X is not found in the distribution, an exception symbol ECS1 will be encoded in S212 and the method will proceed to stage 2 in step S300.

Figure 2 shows the details of step S300, i.e., the second and the third stage according to an embodiment of the invention.

In step S301, it is checked whether or not X is found in the palette. In case X is found in the palette in step S302a, the palette symbol of X is encoded, followed by step S303 of updating the palette count of X, by step S304 of updating the histograms for best match items, and by step S500.

In step S301, it is checked whether or not X is found in the palette. In case X is not found in the palette in step S302b, an exception symbol ESC 2 is encoded and the method proceeds to the third stage.

In the third stage in step S401, the vector X is predicted; in a preferred embodiment of the invention, an MAP prediction algorithm is used in step S401.

Then in step S402, the corresponding prediction values of the components of X are encoded, followed by including X in the palette in step S403, updating the prediction error distribution in step S404, by step S405 of updating the histograms for best match items, and by step S500.

In the tables 1a and 1b the compression performance for different specific embodiments of the invention is listed.

Table 1a: File size in bytes for different embodiments of the invention and different images

| Image | Number of colours | plain method | block prediction | directional mode |
|---|---|---|---|---|
| 0825.image_153FF4F_880x616 | 1825 | 13978 | 13872 | 13889 |
| 408px-Killersudoku_408x408 | 396 | 2377 | 2395 | 2335 |
| 5colors_544x544 | 7 | 3073 | 3082 | 3069 |
| 6471.clip_image013_496x504 | 3246 | 24084 | 24052 | 23995 |
| 76167_600x496 | 696 | 11013 | 10920 | 10952 |
| 7966_Promax_Social_632x584 | 6818 | 53280 | 53112 | 53093 |
| 800px-FBReader.0.1_800x600 | 6970 | 91987 | 92059 | 91769 |
| 8103.screen05_58DD_600x504 | 472 | 9221 | 9138 | 9138 |
| 8176.CustomControl_608x360 | 2297 | 18660 | 18616 | 18586 |
| Acid3detailFirefox_680x584 | 3588 | 35867 | 35811 | 35705 |
| ACTIN_464x392 | 29 | 5569 | 5534 | 5551 |
| Adminer03_800x384 | 256 | 7617 | 7606 | 7550 |
| android_report_536x456 | 1186 | 11298 | 11230 | 11221 |
| Article.Manager_992x448 | 256 | 19975 | 19980 | 19884 |
| b0Ol793kf7_800x600 | 247 | 54081 | 53951 | 54035 |
| BALLZ_648x504 | 1002 | 13009 | 13024 | 12942 |
| BBCNaked_712x520 | 208 | 8853 | 8794 | 8763 |

(continued)

| Image | Number of colours | plain method | block prediction | directional mode |
|---|---|---|---|---|
| browsedatatabs_1080x648 | 459 | 22663 | 22657 | 22563 |
| CEANATPE-SecondS_1000x544 | 112 | 16057 | 16079 | 15931 |
| chart2_976x688 | 882 | 5633 | 5673 | 5561 |
| chrome-extension_472x264 | 5782 | 29947 | 30285 | 29889 |
| cinemahist_576x440 | 255 | 12490 | 12440 | 12395 |
| ciudad-2_0_592x840 | 1836 | 83486 | 83507 | 83356 |
| clipboard-and-scre_640x544 | 378 | 6139 | 6075 | 6024 |
| cLznC_736x792 | 68 | 2827 | 2800 | 2790 |
| Cone-response_544x344 | 122 | 6914 | 6893 | 6874 |
| ContentPublisherTY_696x536 | 248 | 32440 | 32351 | 32377 |
| content_1176x400 | 128 | 31568 | 31567 | 31460 |
| Content_Manager_b_1296x712 | 5927 | 39581 | 39444 | 39328 |
| convert-pdf-to-bmp_496x344 | 256 | 25841 | 25845 | 25787 |
| F6_medium_440x256 | 256 | 17750 | 17751 | 17749 |
| feature-screen-rea_760x712 | 128 | 20270 | 20128 | 20115 |
| feed_content_bb_616x456 | 7354 | 59182 | 59229 | 59102 |
| fonctionnalites-09_648x368 | 256 | 58486 | 58372 | 58401 |
| ga-high-10_456x456 | 32 | 17436 | 17447 | 17414 |
| global-multi-scree_560x688 | 7372 | 54803 | 54233 | 54397 |
| graphic-multi_scre_712x440 | 5863 | 42293 | 42166 | 42196 |
| g_black_hole_392x248 | 255 | 4772 | 4766 | 4693 |
| I-love-science1 02_1024x768 | 199 | 137400 | 137214 | 137363 |
| IC463831_408x152 | 254 | 4045 | 4044 | 4042 |
| import-screen_1000x648 | 2109 | 37427 | 37375 | 37278 |
| Landscape_2080x744 | 645 | 7416 | 7350 | 7436 |
| logo_640x480 | 2 | 837 | 842 | 832 |
| ls-html-screen-pic_984x696 | 1519 | 21985 | 21821 | 21828 |
| main_page_ 392x544 | 6596 | 57086 | 57100 | 57054 |
| mrstfeatscin_408x232 | 254 | 9459 | 9460 | 9445 |
| MS_shift_in_rental_912x632 | 2985 | 27327 | 27185 | 27157 |
| nextguide-usasyn_2048x1536 | 2963 | 74411 | 74169 | 74107 |
| Raritan1_ 776x368 | 600 | 11098 | 11059 | 11026 |
| science_632x568 | 6680 | 85168 | 85077 | 85116 |
| science_process_di_800x848 | 256 | 52220 | 52186 | 52106 |
| Science_Wraps_2010_944x784 | 96 | 76540 | 76563 | 76535 |
| screen-capture_600x448 | 256 | 51747 | 51743 | 51690 |
| Screen-Searchmetri_968x576 | 2116 | 23113 | 22995 | 22982 |
| Screen-shot-2013-0_584x576 | 116 | 14963 | 14946 | 14843 |

(continued)

| Image | Number of colours | plain method | block prediction | directional mode |
|---|---|---|---|---|
| Screen-Shot-2013-_1424x888 | 4809 | 40913 | 40886 | 40784 |
| Screen-Shot-2015-0_688x456 | 252 | 126151 | 126166 | 126151 |
| Screen_content_art_352x240 | 292 | 3417 | 3420 | 3404 |
| stadtplan-museum-o_880x600 | 64 | 109982 | 109990 | 109675 |
| SUFig-57_472x472 | 256 | 13195 | 13110 | 13147 |
| topcategorychart_856x480 | 4793 | 35194 | 35058 | 35128 |
| tux-agafix_200x1640 | 602 | 80345 | 80099 | 80288 |
| Windows-Live-Write_ 376x248 | 404 | 4257 | 4227 | 4221 |
| WOBIB_ 140_416x416 | 9 | 5270 | 5252 | 5266 |
| worddavf1 5bfb5a46c_592x312 | 926 | 9130 | 9099 | 9115 |
| XchatScreenshot2_1016x696 | 1862 | 26320 | 26068 | 26145 |
| Z-scheme_(cs)_808x280 | 856 | 12674 | 12628 | 12596 |
| *total sum* | | **2133610** | **2130016** | **2127639** |

Table 1b: File size in bytes for different embodiments of the invention and different images (Table 1a continued)

| Image | Bytes stage 2 tuning | MAP extended | all tunings | SCF adaptive |
|---|---|---|---|---|
| 0825.image_153FF4F_880x616 | 13835 | 13880 | 13579 | 13579 |
| 408px-Killersudoku_408x408 | 2355 | 2288 | 2244 | 2244 |
| 5colors_544x544 | 3073 | 3072 | 3074 | 3074 |
| 6471 .clip_image013_496x504 | 23185 | 23942 | 22940 | 22940 |
| 76167_600x496 | 10986 | 10942 | 10769 | 10769 |
| 7966_Promax_Social_632x584 | 52381 | 52319 | 51128 | 51128 |
| 800px-FBReader.0.1_800x600 | 88994 | 91482 | 88414 | 88414 |
| 8103.screen05_58DD_600x504 | 9211 | 9209 | 9050 | 9050 |
| 8176.CustomControl_608x360 | 18136 | 18725 | 18111 | 18111 |
| Acid3detailFirefox_680x584 | 33834 | 35332 | 33121 | 33121 |
| ACTIN_464x392 | 5628 | 5569 | 5576 | 5518 |
| Adminer03_800x384 | 7639 | 7617 | 7567 | 7545 |
| android_report_536x456 | 11018 | 11094 | 10691 | 10691 |
| Article.Manager_992x448 | 19080 | 19965 | 18990 | 18990 |
| b001793k|7_800x600 | 50056 | 54077 | 49891 | 49891 |
| BALLZ _648x504 | 12786 | 12915 | 12641 | 12641 |
| BBCNaked_712x520 | 8933 | 8849 | 8792 | 8712 |
| browsedatatabs_1080x648 | 22698 | 22601 | 22532 | 22532 |
| CEANATPE-Second-S_1000x544 | 16497 | 16052 | 16391 | 15951 |
| chart2_976x688 | 5539 | 5604 | 5497 | 5497 |
| chrome-extension_472x264 | 29583 | 29440 | 29421 | 29421 |

(continued)

| Image | Bytes stage 2 tuning | MAP extended | all tunings | SCF adaptive |
|---|---|---|---|---|
| cinemahist_576x440 | 12284 | 12465 | 12142 | 12142 |
| ciudad-2_0_592x840 | 81273 | 83374 | 81052 | 81052 |
| clipboard-and-scre_640x544 | 6163 | 6148 | 6002 | 6002 |
| cLznC_736x792 | 2843 | 2826 | 2786 | 2771 |
| Cone-response_544x344 | 6998 | 6908 | 6941 | 6857 |
| ContentPublisherTY_696x536 | 29673 | 32422 | 29517 | 29517 |
| content_1176x400 | 31530 | 31566 | 31425 | 31425 |
| Content_Manager_b_1296x712 | 38118 | 38626 | 36839 | 36839 |
| convert-pdf-to-bmp_496x344 | 24149 | 25839 | 24100 | 24100 |
| F6_medium_40x256 | 15805 | 17738 | 15796 | 15796 |
| feature-screen-rea_760x712 | 19475 | 20270 | 19216 | 19216 |
| feed_content_bb_616x456 | 57414 | 58766 | 56977 | 56977 |
| fonctionnalites-09_648x368 | 56416 | 58491 | 56228 | 56228 |
| ga-high-10_456x456 | 17444 | 17436 | 17433 | 17425 |
| global-multi-scree_560x688 | 53527 | 52974 | 50976 | 50976 |
| graphic-multi_scre_712x440 | 41003 | 41115 | 39661 | 39661 |
| g_black_hole_392x248 | 4855 | 4762 | 4765 | 4682 |
| l-love-science102_1024x768 | 133289 | 137398 | 133071 | 133071 |
| IC463831_408x152 | 4013 | 4020 | 3988 | 4019 |
| import-screen_1000x648 | 35367 | 37301 | 35067 | 35067 |
| Landscape_2080x744 | 7270 | 7404 | 7186 | 7186 |
| logo_640x480 | 837 | 837 | 836 | 836 |
| ls-html-screen-pic_984x696 | 21705 | 21947 | 21414 | 21414 |
| main_page_392x544 | 54045 | 56766 | 53709 | 53709 |
| mrstfeatscin_408x232 | 9522 | 9434 | 9483 | 9422 |
| MS_shift_in_rental_912x632 | 26850 | 27250 | 26522 | 26522 |
| nextguide-usasyn_2048x1536 | 69531 | 73724 | 68348 | 68348 |
| Raritan1_776x368 | 10584 | 11080 | 10473 | 10473 |
| science_632x568 | 82282 | 83947 | 80938 | 80938 |
| science_process_di_800x848 | 48876 | 52215 | 48740 | 48740 |
| Science_Wraps_2010_944x784 | 77085 | 76539 | 77103 | 76558 |
| screen-capture_600x448 | 50051 | 51738 | 49984 | 49984 |
| Screen-Searchmetri_968x576 | 22823 | 22866 | 22375 | 22375 |
| Screen-shot-2013-0_584x576 | 15526 | 14956 | 15393 | 14829 |
| Screen-Shot-2013-_1424x888 | 39629 | 40377 | 38979 | 38979 |
| Screen-Shot-2015-0_688x456 | 120479 | 126127 | 120469 | 120469 |
| Screen_content_art_352x240 | 3420 | 3405 | 3399 | 3399 |
| stadtplan-museum-o_880x600 | 110493 | 109983 | 110198 | 109685 |

(continued)

| Image | Bytes stage 2 tuning | MAP extended | all tunings | SCF adaptive |
|---|---|---|---|---|
| SUFig-57_472x472 | 12585 | 13195 | 12463 | 12463 |
| topcategorychart_856x480 | 33982 | 34601 | 33230 | 33230 |
| tux-agafix_1200x1640 | 78818 | 80313 | 78475 | 78475 |
| Windows-Live-Write_376x248 | 4260 | 4233 | 4182 | 4182 |
| WOBIB_140_416x416 | 5270 | 5270 | 5248 | 5248 |
| worddavf15bfb5a46c_592x312 | 8802 | 9051 | 8683 | 8683 |
| XchatScreenshot2_1016x696 | 26289 | 25927 | 25542 | 25542 |
| Z-scheme_(cs)_808x280 | 12248 | 12623 | 12093 | 12093 |
| *total sum* | **2070348** | **2121227** | **2049866** | **2047427** |

The compression scheme has been tested using 67 images. These images mainly have synthetic content like diagrams, charts, text, and snapshots from screens.

The column 'plain method' shows the file sizes when all tuning methods are disabled. The total number of bytes is 2 133 610. The next four columns to the right contain the results for cases where one of the four tunings discussed above is enabled. The decreased total sums show that all four modifications have a positive effect on average, while the stage-2 tuning obtains the most significant improvement. The 'block prediction' has the smallest effect on the compression performance and even increases the file size by some bytes for some images.

The latter is caused by the overhead for transmitting the quad-tree structure. The maximum savings are reached for 'global-multi-screen 560x688' with 570 bytes. The main advantage of 'block prediction' is not only the bit savings but the reduced processing time, when large areas can be predicted and do not have to be processed pixel by pixel.

The 'directional mode' also saves only few bytes per image, since there are, in general, only few positions in the image where this mode can take action.

Although 'stage-2 tuning' seems to benefit the compression performance most, there are some images with a performance drop compared to the plain scheme (Screen-shot- 2013-0 584x576 a.o.). This typically concerns images with only a few colors. Here, the local correlations are low in general, or the MAP prediction is not appropriate for estimating the current color - for example, when color gradients (shadings) are generated using dithering techniques (e.g. Science Wraps 2010 944x784). In the final program version, 'stage-2 tuning' is adaptively disabled in these cases. The modification of the MAP estimation of color components (column 'MAP extended') has a positive effect on nearly all images in the test. The image 'global-multi-screen 560x688' benefits most with savings of 1 829 bytes.

The fewer colors an image has, the less frequently the processing in the third stage is required, and the influence of this tuning technique decreases. The column 'all tunings' shows that the positive effects of all four modifications accumulate. The column 'SCF auto' contains the file sizes when 'stage-2 tuning' is automatically disabled.

As the pattern list and the similarity list, i.e., the first and the second list, are automatically generated in the course of compression, the memory consumption might be of interest. Especially the pattern list can grow until the last pixel has been coded. The size of the list depends on the number of different patterns in the image which is, in the worst case, equal to the number of pixels, when all tolerance thresholds are set to zero.

It is important to mention that the pattern list must not store the patterns themselves, since these patterns are already in the image array. The list solely maintains the corresponding addresses, i.e., one pointer per pattern. In addition, a pointer to the next list element is required (chained list). The histograms associated with each single pattern are the second factor in memory-space estimation.

Theoretically, the number of RGB triplets to be stored per pattern is equal to the number of different colors in the image. Each triplet has to be supplemented with its frequency. Its is relevant for the skilled person what is the maximum number of triplets that must be stored in practice. This can be derived as follows: It is assumed that the number of pixels in the image is equal to N. Then, the maximum number of different color triplets is equal to N as well as the number of different patterns.

In this case, each pattern occurs in combination with a single triplet, that means, only N triplets must be stored. If one pattern $P_0$ appears twice, the number of different patterns is reduced to N -1. The pattern $P_0$ can have combinations with two different color triplets, while all others still have a single color assigned. If the number of different patterns is reduced to N - 2, either one pattern can appear in combination with a maximum of three different colors, or two patterns appear in combination with two colors, and so forth.

In total, the number of triplet entries can never exceed N! and the similarity list merely contains pointers to those entries of the pattern list that are found to be similar to the current pattern. Depending on the tolerance thresholds, only few pointers have to be stored.

A Comparison between different state of the art methods, namely LOCO, 7zip, HEVC (including SCC extension), FP8v3, and the present invention has been preformed. The test images used in this comparison have less than 8 000 colors. LOCO, including the adaptive color-space conversion that is also used for the present invention, achieves the worst results as it is not designed for synthetic images. The performance may be improved by using a color palette instead of RGB/YUV triples.

The archiver program 7zip (Ultra, LZMA) shows a distinctly better compression, even though it does not exploit the two-dimensional characteristic of the data. The new video compression standard HEVC has been applied using the standard configuration of the screencontent-coding extension (SCM-6.0, encoder intra main - scc lossless.cfg, Input-ColourSpaceConvert= RGBtoGBR). The tools for screen content (cross component prediction, intrablock copy, ACT, and palette mode) had been enabled. HEVC produces much smaller files than LOCO or 7zip on average.

FP8 version 3 is an archiver program based on context mixing that is dedicated to images. It was executed with option '-8' and outperforms HEVC. On average, however, the present invention compression leads to best results. The savings are more than 20% compared to HEVC and about 4% compared to FP8.

The present invention outperforms HEVC for images containing up to 30 000 colors, while the performance is comparable when considering other images. The evaluation of HEVC and the present invention has been supplemented with investigations about the order of color components.

The present invention estimates a proper distribution of contextual probabilities for each single pixel position. It is based on a technique that stores a subset of all occurring contexts (patterns) in a linked list. Compared to simple template matching, the proposed invention can take information from all processed pixels into account without being too time consuming. The soft definition of a pattern match, i.e., application of tolerance thresholds, incomplete matches, and the aggregation of knowledge from different patterns, in combination with a three-stage probability modeling are used in the present invention.

With an increasing number of colors, coding stage 1 becomes less effective and the process has to enter stage 2 or stage 3, which both still have potential for improvement. In principle the used prediction technique is limiting the performance. Nevertheless, in application to screen-content images used in the standardization of HEVC, the present invention still performs better than HEVC for images with up to about 30 000 colors. In general, block segmentation as in HEVC and switching between different processing strategies would benefit the processing. Regions with a low number of colors could be compressed using the present invention, while other regions could predicatively be processed.

The skilled person realizes that the above described method and system result in a lossless compression. However, the same system and method can be also used for a near-lossless or even a lossy compression.

Preferably the method would encode in the first stage even if no exact match for X is found in the distribution, but a match for X is found within a certain acceptable range in the distribution.

Preferably the method would encode in the second stage even if no exact match for X is found in the palette, but a match for X is found within a certain acceptable range in the palette. Encoding X in an earlier stage will reduce the computational effort. However, depending on the acceptable range the earlier encoding will result in a near-lossless or a lossy compression. Preferably, the decision about the acceptable range is made based on a rate-distortion optimization, while the measure of distortion can be either dependent on an objective measure or based on the human visual system (subjective measure).

**Claims**

1. Method for encoding an image, in particular for reducing the computational complexity for encoding the image, based on an optimal estimation of a distribution probability, wherein the method comprises encoding of at least one symbol for a property vector X of a respective pixel of a plurality of pixels in sequence based on contextual patterns formed by respective property vectors of a plurality of neighboring pixels of the respective pixel, wherein the encoding of at least one symbol for a property vector X comprises

   a) encoding a distribution symbol of the property vector X from a distribution of the property vectors found in the contextual patterns that are identical or similar to the contextual pattern of the respective pixel, when the property vector X of the respective pixel occurred in the distribution of the property vectors found in the contextual patterns that are identical or similar to the contextual pattern of the respective pixel;
   b) encoding a first stage exception handling symbol and a palette symbol of the respective property vector X of a dynamically generated palette of property vectors, when the respective property vector X of the respective pixel has not occurred in the distribution of the property vectors found in the contextual patterns that are identical or similar to the contextual pattern of the respective pixel and the property vector X is found in the palette; and

c) encoding a first stage exception handling symbol, a second stage exception handling symbol, and a representation of all components of the property vector X, when the property vector X has not occurred in the distribution of the property vectors found in the contextual patterns that are identical or similar to the contextual pattern of the respective pixel and the property vector X is not found in the palette.

2. The method of claim 1, wherein the similarity between two contextual patterns is determined based on the comparison of at least one threshold value with a modulus of a vector difference of the property vector of at least one pixel of the respective contextual pattern and a pixel in a corresponding position of the pattern referred to in the first list.

3. The method of claim 1 or 2, wherein a similarity value is calculated from the individual distance measures between property vectors in the corresponding positions in the respective patterns, and/or
wherein a similarity value is the count of positions in the contextual pattern which are similar to the corresponding positions in the other pattern.

4. The method any one of claims 1 to 3, wherein during the encoding of the image a first list is dynamically generated, which comprises references to patterns found in the image and further comprises for every respective pattern a histogram containing a distribution of all property vectors X which have occurred in the respective pattern during the scan, and wherein when during the encoding of the respective pixel no corresponding pattern is found in the first list, the respective pattern is appended to the first list, wherein the patterns comprised in the first list are not identical.

5. The method of any one of claims 1 to 4, further comprising the steps of

updating the property vector distribution of the palette after the encoding of the first stage exception handling symbol and the palette symbol of the respective property vector X; and
updating a prediction error distribution after the encoding of the first stage exception handling symbol, the second stage exception handling symbol, and the prediction error.

6. The method of any one of claims 1 to 5, wherein during the encoding of a respective property vector X a second list is dynamically and temporally generated, based on a calculated similarity value,
wherein the second list comprises a reference to at least one contextual pattern of the first list being similar to the contextual pattern of the neighboring pixels of the respective pixel or
wherein the second list is empty when is no similar pattern has been found to the contextual pattern of the neighboring pixels of the respective pixel.

7. The method of any one of claims 1 to 6, further comprising the step of updating the respective histograms of patterns referred to in the first list after the encoding of the respective property vector X.

8. The method of claims 6 or 7, wherein the distribution of the property vectors found in the contextual patterns that are identical or similar to the contextual pattern of the respective pixel, is generated by merging the respective histograms of all items on the second list having a highest similarity value.

9. The method of any one of claims 2 to 8, wherein a set of thresholds for each of the positions in the contextual pattern is determined based on image properties.

10. The method of any one of claims 2 to 9, wherein the thresholds are variably adapted during the encoding.

11. The method of any one of claims 1 to 10, further comprising the step of reducing the number of items on the first and/or second list by

a) deleting at least one pattern which is determined as not being relevant not been recently found to be similar from the first list, and/or
b) deleting at least one pattern which is determined as not being relevant with a similarity value smaller than the highest similarity value from the second list.

12. The method of any one of claims 1 to 11, wherein the representation of all components of the property vector X is based on a prediction of the components and wherein for a first component a preferred prediction method is determined and the preferred prediction method is used to predict all further components.

13. Computer program product comprising one or more computer readable media having computer executable instructions for performing the steps of the method of one of the preceding claims.

14. System for encoding an image, in particular for reducing the computational complexity for encoding the image, based on an optimal estimation of a distribution probability, the system is configured to encode at least one symbol for a property vector X of a respective pixel of a plurality of pixels in sequence based on contextual patterns formed by respective property vectors of a plurality of neighboring pixels of the respective pixel, the system comprising:

an encoding unit being configured to encode a distribution symbol of the property vector X from a distribution of the property vectors found in the contextual patterns that are identical or similar to the contextual pattern of the respective pixel, when the property vector X of the respective pixel has occurred in the distribution of the property vectors found in the contextual patterns that are identical or similar to the contextual pattern of the respective pixel,
wherein the encoding unit is configured to encode a first stage exception handling symbol and a palette symbol of the respective property vector X of a dynamically generated palette of property vectors, when the respective property vector X of the respective pixel has not occurred in the distribution of the property vectors found in the contextual patterns that are identical or similar to the contextual pattern of the respective pixel and the property vector X is found in the palette, and
wherein the encoding unit is further configured to encode a first stage exception handling symbol, a second stage exception handling symbol, and a representation of all components of the property vector X, when the property vector X has not occurred in the distribution of the property vectors found in the contextual patterns that are identical or similar to the contextual pattern of the respective pixel and the property vector X is not found in the palette.

15. System according to claim 14, comprising means being configured to determine the similarity between two contextual patterns based on the comparison of at least one threshold value with a modulus of a vector difference of the property vector of at least one pixel of the respective contextual pattern and a pixel in a corresponding position of the pattern referred to in the first list.

**Patentansprüche**

1. Verfahren zum Codieren eines Bilds, insbesondere zum Reduzieren der Rechenkomplexität zum Codieren des Bilds, beruhend auf einer optimalen Schätzung einer Verteilungswahrscheinlichkeit, wobei das Verfahren das Codieren von mindestens einem Symbol für einen Eigenschaftsvektor X eines jeweiligen Pixels von mehreren Pixeln der Reihe nach beruhend auf Kontextmustern aufweist, die durch jeweilige Eigenschaftsvektoren von mehreren benachbarten Pixeln des jeweiligen Pixels gebildet werden, wobei das Codieren von mindestens einem Symbol für einen Eigenschaftsvektor X aufweist:

a) Codieren eines Verteilungssymbols des Eigenschaftsvektors X aus einer Verteilung der Eigenschaftsvektoren, die in den Kontextmustern gefunden werden, die zum Kontextmuster des jeweiligen Pixels identisch oder ähnlich sind,
wenn der Eigenschaftsvektor X des jeweiligen Pixels in der Verteilung der Eigenschaftsvektoren auftritt, die in den Kontextmustern gefunden werden, die zum Kontextmuster des jeweiligen Pixels identisch oder ähnlich sind;
b) Codieren eines Ausnahmebehandlungssymbols erster Stufe und eines Palettensymbols des jeweiligen Eigenschaftsvektors X einer dynamisch erzeugten Palette von Eigenschaftsvektoren,
wenn der jeweilige Eigenschaftsvektor X des jeweiligen Pixels nicht in der Verteilung der Eigenschaftsvektoren auftritt, die in den Kontextmustern gefunden werden, die zum Kontextmuster des jeweiligen Pixels identisch oder ähnlich sind, und der Eigenschaftsvektor X in der Palette gefunden wird; und
c) Codieren eines Ausnahmebehandlungssymbols erster Stufe, eines Ausnahmebehandlungssymbols zweiter Stufe und einer Darstellung aller Komponenten des Eigenschaftsvektors X, wenn der Eigenschaftsvektor X nicht in der Verteilung der Eigenschaftsvektoren auftritt, die in den Kontextmustern gefunden werden, die zum Kontextmuster des jeweiligen Pixels identisch oder ähnlich sind und der Eigenschaftsvektor X nicht in der Palette gefunden wird.

**2.** Verfahren nach Anspruch 1, wobei die Ähnlichkeit zwischen zwei Kontextmustern beruhend auf dem Vergleich von mindestens einem Schwellenwert mit einem Betrag einer Vektordifferenz des Eigenschaftsvektors von mindestens einem Pixel des jeweiligen Kontextmusters und einem Pixel an einer entsprechenden Position des Musters bestimmt wird, das in der ersten Liste referenziert wird.

**3.** Verfahren nach Anspruch 1 oder 2, wobei ein Ähnlichkeitswert aus den einzelnen Abstandsmaßen zwischen Eigenschaftsvektoren an den entsprechenden Positionen in den jeweiligen Mustern berechnet wird, und/oder wobei ein Ähnlichkeitswert der Zählwert von Positionen im Kontextmuster ist, die zu den entsprechenden Positionen im anderen Muster ähnlich sind.

**4.** Verfahren nach einem der Ansprüche 1 bis 3, wobei während des Codierens des Bilds dynamisch eine erste Liste erzeugt wird, die Verweise auf im Bild gefundene Muster aufweist und ferner für jedes jeweilige Muster ein Histogramm aufweist, das eine Verteilung aller Eigenschaftsvektoren X enthält, die im jeweiligen Muster während der Abtastung aufgetreten sind, und wobei wenn während des Codierens des jeweiligen Pixels kein entsprechendes Muster in der ersten Liste gefunden wird, das jeweilige Muster an die erste Liste angehängt wird, wobei die in der ersten Liste enthaltenen Muster nicht identisch sind.

**5.** Verfahren nach einem der Ansprüche 1 bis 4, das ferner die Schritte aufweist:

Aktualisieren der Eigenschaftsvektor-Verteilung der Palette nach dem Codieren des Ausnahmebehandlungssymbols erster Stufe und des Palettensymbols des jeweiligen Eigenschaftsvektors X; und
Aktualisieren einer Vorhersagefehler-Verteilung nach dem Codieren des Ausnahmebehandlungssymbols erster Stufe, des Ausnahmebehandlungssymbols zweiter Stufe und des Vorhersagefehlers.

**6.** Verfahren nach einem der Ansprüche 1 bis 5, wobei während des Codierens eines jeweiligen Eigenschaftsvektors X beruhend auf einem berechneten Ähnlichkeitswert dynamisch und vorübergehend eine zweite Liste erzeugt wird, wobei die zweite Liste einen Verweis auf mindestens ein Kontextmuster der ersten Liste aufweist, das ähnlich zum Kontextmuster der benachbarten Pixel des jeweiligen Pixels ist, oder wobei die zweite Liste leer ist, wenn kein zum Kontextmuster der benachbarten Pixel des jeweiligen Pixels ähnliches Muster gefunden worden ist.

**7.** Verfahren nach einem der Ansprüche 1 bis 6, das ferner den Schritt des Aktualisierens der jeweiligen Histogramme von Mustern, die in der ersten Liste referenziert werden, nach dem Codieren des jeweiligen Eigenschaftsvektors X aufweist.

**8.** Verfahren nach Anspruch 6 oder 7, wobei die Verteilung der Eigenschaftsvektoren, die in den Kontextmustern gefunden werden, die zum Kontextmuster des jeweiligen Pixels identisch oder ähnlich sind, durch Vereinigen der jeweiligen Histogramme aller Einträge in der zweiten Liste erzeugt wird, die einen höchsten Ähnlichkeitswert aufweisen.

**9.** Verfahren nach einem der Ansprüche 2 bis 8, wobei ein Satz von Schwellen für jede der Positionen im Kontextmuster beruhend auf Bildeigenschaften bestimmt wird.

**10.** Verfahren nach einem der Ansprüche 2 bis 9, wobei die Schwellen während des Codierens variabel angepasst werden.

**11.** Verfahren nach einem der Ansprüche 1 bis 10, das ferner den Schritt des Reduzierens der Anzahl der Einträge in der ersten und/oder zweiten Liste aufweist, durch:

a) Löschen von mindestens einem Muster, von dem festgestellt wird, dass es nicht relevant ist, und von dem nicht kürzlich festgestellt worden ist, dass es ähnlich ist, aus der ersten Liste, und/oder
b) Löschen mindestens eines Musters, von dem festgestellt wird, dass es nicht relevant ist, mit einem kleineren Ähnlichkeitswert als den höchsten Ähnlichkeitswert aus der zweiten Liste.

**12.** Verfahren nach einem der Ansprüche 1 bis 11, wobei die Darstellung aller Komponenten des Eigenschaftsvektors X auf einer Vorhersage der Komponenten beruht und wobei für eine erste Komponente ein bevorzugtes Vorhersageverfahren bestimmt wird und das bevorzugte Vorhersageverfahren verwendet wird, um alle weiteren Komponenten vorherzusagen.

**13.** Computerprogrammprodukt, das ein oder mehrere computerlesbare Medien aufweist, die computerausführbare Befehle zum Durchführen der Schritte des Verfahrens von einem der vorhergehenden Ansprüche aufweist.

**14.** System zum Codieren eines Bilds, insbesondere zum Reduzieren der Rechenkomplexität zum Codieren des Bilds, beruhend auf einer optimalen Schätzung einer Verteilungswahrscheinlichkeit, wobei das System konfiguriert ist, mindestens ein Symbol für einen Eigenschaftsvektor X eines jeweiligen Pixels von mehreren Pixeln der Reihe nach beruhend auf Kontextmustern zu codieren, die durch jeweilige Eigenschaftsvektoren von mehreren benachbarten Pixeln des jeweiligen Pixels gebildet werden, wobei das System aufweist:

eine Codierungseinheit, die konfiguriert ist, ein Verteilungssymbol des Eigenschaftsvektors X aus einer Verteilung der Eigenschaftsvektoren zu codieren, die in den Kontextmustern gefunden werden, die zum Kontextmuster des jeweiligen Pixels identisch oder ähnlich sind, wenn der Eigenschaftsvektor X des jeweiligen Pixels in der Verteilung der Eigenschaftsvektoren aufgetreten ist, die in den Kontextmustern gefunden werden, die zum Kontextmuster des jeweiligen Pixels identisch oder ähnlich sind,

wobei die Codierungseinheit konfiguriert ist, ein Ausnahmebehandlungssymbol erster Stufe und ein Palettensymbol des jeweiligen Eigenschaftsvektors X einer dynamisch erzeugten Palette von Eigenschaftsvektoren zu codieren, wenn der jeweilige Eigenschaftsvektor X des jeweiligen Pixels nicht in der Verteilung der Eigenschaftsvektoren aufgetreten ist, die in den Kontextmustern gefunden werden, die zum Kontextmuster des jeweiligen Pixels identisch oder ähnlich sind, und der Eigenschaftsvektor X in der Palette gefunden wird, und

wobei die Codierungseinheit ferner konfiguriert ist, ein Ausnahmebehandlungssymbol erster Stufe, ein Ausnahmebehandlungssymbol zweiter Stufe und eine Darstellung aller Komponenten des Eigenschaftsvektors X zu codieren, wenn der Eigenschaftsvektor X nicht in der Verteilung der Eigenschaftsvektoren aufgetreten ist, die in den Kontextmustern gefunden werden, die zum Kontextmuster des jeweiligen Pixels identisch oder ähnlich sind und der Eigenschaftsvektor X nicht in der Palette gefunden wird.

**15.** System nach Anspruch 14, das Mittel aufweist, die konfiguriert sind, die Ähnlichkeit zwischen zwei Kontextmustern beruhend auf dem Vergleich von mindestens einem Schwellenwert mit einem Betrag einer Vektordifferenz des Eigenschaftsvektors von mindestens einem Pixel des jeweiligen Kontextmusters und einem Pixel an einer entsprechenden Position des Musters zu bestimmen, das in der ersten Liste referenziert wird.

## Revendications

**1.** Procédé de codage d'une image, destiné en particulier à réduire la complexité algorithmique pour le codage de l'image, sur la base d'une estimation optimale d'une probabilité de distribution, ledit procédé comprenant le codage d'au moins un symbole pour un vecteur de propriété X d'un pixel respectif d'une pluralité de pixels en séquence sur la base de motifs contextuels formés par des vecteurs de propriété respectifs d'une pluralité de pixels contigus au pixel respectif, le codage d'au moins un symbole pour un vecteur de propriété X comprenant

a) le codage d'un symbole de distribution du vecteur de propriété X à partir d'une distribution des vecteurs de propriété trouvés dans les motifs contextuels identiques ou similaires au motif contextuel du pixel respectif, si le vecteur de propriété X du pixel respectif est survenu dans la distribution des vecteurs de propriété trouvés dans les motifs contextuels identiques ou similaires au motif contextuel du pixel respectif ;

b) le codage d'un symbole de gestion d'exception de premier étage et d'un symbole de palette du vecteur de propriété X respectif d'une palette de vecteurs de propriété générée dynamiquement, si le vecteur de propriété X respectif du pixel respectif n'est pas survenu dans la distribution des vecteurs de propriété trouvés dans les motifs contextuels identiques ou similaires au motif contextuel du pixel respectif et si le vecteur de propriété X est trouvé dans la palette ; et

c) le codage d'un symbole de gestion d'exception de premier étage, d'un symbole de gestion d'exception de deuxième étage, et une représentation de toutes les composantes du vecteur de propriété X, si le vecteur de propriété X n'est pas survenu dans la distribution des vecteurs de propriété trouvés dans les motifs contextuels identiques ou similaires au motif contextuel du pixel respectif et si le vecteur de propriété X n'est pas trouvé dans la palette.

**2.** Procédé selon la revendication 1, où la similarité entre deux motifs contextuels est déterminée sur la base de la comparaison d'au moins une valeur seuil avec un module d'une différence vectorielle du vecteur de propriété d'au moins un pixel du motif contextuel respectif et un pixel à une position correspondante du motif référencé dans la première liste.

**3.** Procédé selon la revendication 1 ou la revendication 2, où une valeur de similarité est calculée à partir des mesures de distances individuelles entre vecteurs de propriété aux positions correspondantes dans les motifs respectifs, et/ou une valeur de similarité est le décompte de positions dans le motif contextuel, lesquelles sont similaires aux positions correspondantes dans l'autre motif.

**4.** Procédé selon l'une des revendications 1 à 3, où lors du codage de l'image, une première liste est générée dynamiquement, laquelle comprend des références aux motifs trouvés dans l'image et comprend en outre pour chaque motif respectif un histogramme contenant une distribution de tous les vecteurs de propriété X survenus dans le motif respectif pendant le scan, et où, si aucun motif correspondant n'est trouvé dans la première liste lors du codage du pixel respectif, le motif respectif est annexé à la première liste, les motifs compris dans la première liste n'étant pas identiques.

**5.** Procédé selon l'une des revendications 1 à 4, comprenant en outre les étapes d'actualisation du vecteur de propriété distribution de la palette après codage du symbole de gestion d'exception de premier étage et du symbole de palette du vecteur de propriété X respectif ; et
d'actualisation d'une distribution d'erreur de prédiction après codage du symbole de gestion d'exception de premier étage, du symbole de gestion d'exception de deuxième étage, et de l'erreur de prédiction.

**6.** Procédé selon l'une des revendications 1 à 5, où lors du codage d'un vecteur de propriété X respectif, une deuxième liste est générée dynamiquement et temporairement sur la base d'une valeur de similarité calculée,
la deuxième liste comprenant une référence à au moins un motif contextuel de la première liste similaire au motif contextuel des pixels contigus au pixel respectif, ou
la deuxième liste étant vide si aucun motif similaire au motif contextuel des pixels contigus au pixel respectif n'a été trouvé.

**7.** Procédé selon l'une des revendications 1 à 6, comprenant en outre l'étape d'actualisation des histogrammes respectifs de motifs référencés dans la première liste après codage du vecteur de propriété X respectif.

**8.** Procédé selon la revendication 6 ou la revendication 7, où la distribution des vecteurs de propriété trouvés dans les motifs contextuels identiques ou similaires au motif contextuel du pixel respectif est générée par fusion des histogrammes respectifs de tous les items sur la deuxième liste pourvus d'une valeur de similarité maximale.

**9.** Procédé selon l'une des revendications 2 à 8, où un ensemble de seuils pour chacune des positions dans le motif contextuel est déterminé sur la base de propriétés d'image.

**10.** Procédé selon l'une des revendications 2 à 9, où les seuils sont adaptés de manière variable lors du codage.

**11.** Procédé selon l'une des revendications 1 à 10, comprenant en outre l'étape de réduction du nombre d'items sur la première et/ou la deuxième liste par

a) suppression d'au moins un motif déterminé comme non pertinent, n'ayant pas été récemment trouvé similaire dans la première liste, et/ou
b) suppression d'au moins un motif déterminé comme non pertinent, avec une valeur de similarité inférieure à la valeur de similarité maximale dans la deuxième liste.

**12.** Procédé selon l'une des revendications 1 à 11, où la représentation de toutes les composantes du vecteur de propriété X est effectuée sur la base d'une prédiction des composantes, et où un procédé de prédiction préférentiel est déterminé pour une première composante, et le procédé de prédiction préférentiel est utilisé pour prédire toutes les autres composantes.

**13.** Produit de programme informatique comprenant un ou plusieurs supports lisibles par ordinateur présentant des instructions exécutables par ordinateur pour lancer les étapes du procédé selon l'une des revendications précédentes.

**14.** Système pour le codage an image, destiné en particulier à réduire la complexité algorithmique pour le codage de l'image, sur la base d'une estimation optimale d'une probabilité de distribution, ledit système étant prévu pour coder au moins un symbole pour un vecteur de propriété X d'un pixel respectif d'une pluralité de pixels en séquence sur la base de motifs contextuels formés par des vecteurs de propriété respectifs d'une pluralité de pixels contigus au pixel respectif, ledit système comprenant :

une unité de codage prévue pour coder un symbole de distribution du vecteur de propriété X à partir d'une distribution des vecteurs de propriété trouvés dans les motifs contextuels identiques ou similaires au motif contextuel du pixel respectif, si le vecteur de propriété X du pixel respectif est survenu dans la distribution des vecteurs de propriété trouvés dans les motifs contextuels identiques ou similaires au motif contextuel du pixel respectif,

l'unité de codage étant prévue pour coder un symbole de gestion d'exception de premier étage et un symbole de palette du vecteur de propriété X respectif d'une palette de vecteurs de propriété générée dynamiquement, si le vecteur de propriété X respectif du pixel respectif n'est pas survenu dans la distribution des vecteurs de propriété trouvés dans les motifs contextuels identiques ou similaires au motif contextuel du pixel respectif et si le vecteur de propriété X est trouvé dans la palette, et

l'unité de codage étant en outre prévue pour coder un symbole de gestion d'exception de premier étage, un symbole de gestion d'exception de deuxième étage, et une représentation de toutes les composantes du vecteur de propriété X, si le vecteur de propriété X n'est pas survenu dans la distribution des vecteurs de propriété trouvés dans les motifs contextuels identiques ou similaires au motif contextuel du pixel respectif et si le vecteur de propriété X n'est pas trouvé dans la palette.

15. Système selon la revendication 14, comprenant un moyen prévu pour déterminer la similarité entre deux motifs contextuels sur la base de la comparaison d'au moins une valeur seuil avec un module d'une différence vectorielle du vecteur de propriété d'au moins un pixel du motif contextuel respectif et un pixel à une position correspondante du motif référencé dans la première liste.

**Fig. 1**

Fig. 2

S300

S301

X in palette ?  — n →  Encode ESC2  — S302b

y

S302a  Encode palette value of X

S401  Predict X

S303  Update X distribution in palette

S402  Encode components representing X

S304  Update histograms for best match items in similarity list

S403  Include X in palette

S404  Update prediction error distribution

Stage 2

S405  Update histograms for best match items in similarity list

Stage 3

S500

S500

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016316214 A1

**Non-patent literature cited in the description**

- TEXT IMAGE COMPRESSION USING SOFT PATTERN MATCHING. **HOWARD P G.** COMPUTER JOURNAL. OXFORD UNIVERSITY PRESS, 01 January 1997, vol. 40, 146-156